# EUROPÄISCHE PATENTSCHRIFT

(11) **EP 0 549 818 B1**
(45) Veröffentlichungstag und Bekanntmachung des Hinweises auf die Patenterteilung: **20.09.1995**
(21) Anmeldenummer: 91121410.4
(22) Anmeldetag: 01.01.1992
(51) Int. Cl.: A47J 43/08, A47J 43/046, A47J 42/56

(54) **Küchenmaschine**
Kitchen appliance
Appareil de cuisine

(43) Veröffentlichungstag der Anmeldung: 07.07.1993
(73) Patentinhaber: MAWEVA HOLDING AG, CH-9532 Rickenbach b. Wil (CH)
(72) Erfinder: Rebel, Joachim, W-7313 Reichenbach/Fils (DE)
(74) Vertreter: Patentanwälte Bartels und Partner

(56) Entgegenhaltungen:
- EP-A- 0 022 465
- EP-A- 0 475 470
- DE-A- 3 837 961

## Beschreibung

Die Erfindung betrifft eine Küchenmaschine, insbesondere eine Haushaltsküchenmaschine, welche die Merkmale des Oberbegriffs des Anspruches 1 aufweist.

Bei einer bekannten Küchenmaschine dieser Art (DE-A-38 37 961) kann, wenn die Antriebsvorrichtung ordnungsgemäß auf das Gehäuse des Unterteils aufgesetzt und mit dem im Unterteil vorgesehenen Getriebe gekuppelt ist, der Antriebsmotor mit Hilfe eines Hauptschalters nur eingeschaltet werden, wenn der Deckel des Arbeitsbehälters sich in seiner arretierten Drehstellung befindet und dabei einen in der Antriebsvorrichtung vorgesehenen Sicherheitsschalter geschlossen hält. Parallel zu diesem Sicherheitsschalter und in Reihe mit dem Hauptschalter liegt nämlich ein Überbrückungsschalter, der geöffnet ist, wenn die Antriebsvorrichtung auf das Gehäuse des Unterteils aufgesetzt ist. Trotz dieser Sicherheitsmaßnahmen ist der Sicherheitsstandard ungenügend. Der Deckel kann nämlich vom Arbeitsbehälter abgenommen werden, unmittelbar nachdem der Sicherheitsschalter geöffnet worden ist. Während des Auslaufens des Motors nach einer Stromunterbrechung durch den Sicherheitsschalter kann deshalb ein Benutzer in den Arbeitsbereich der Werkzeuge des Arbeitsgerätes greifen.

In der nicht vorveröffentlichten, aber gemäß Artikel 54(3) EPÜ als Stand der Technik geltenden EP-A-0475470 ist eine Küchenmaschine beschrieben, die als Antriebsvorrichtung einen Stabmixer aufweist, dessen Gehäuse in eine Halterung eingesetzt werden muß, um den Stab mit dem im Gehäuse des Unterteils der Küchenmaschine vorgesehenen Getriebe kuppeln zu können. Letzteres ist nur möglich, wenn ein in der Halterung schwenkbar gelagertes Sperrglied entgegen der Kraft einer Feder von einem am Deckel des Arbeitsbehälters vorgesehenen Mitnehmer bei einer Drehung des Deckels in seine arretierte Stellung in die Freigabestellung geschwenkt worden ist. In dieser Freigabestellung des Sperrgliedes verhindert eine am Deckel vorgesehene Nase zusammen mit dem Sperrglied ein Drehen des Deckels im Sinne des Öffnens.

Der Erfindung liegt die Aufgabe zugrunde, eine Küchenmaschine der eingangs genannten Art zu schaffen, welche einen hohen Sicherheitsstandard hat, d.h. vor allem einen möglichst weitgehenden Schutz davor bietet, daß der Benutzer in den Arbeitsbereich der Werkzeuge greifen kann, während diese in Bewegung sind, der aber dennoch kostengünstig ist. Diese Aufgabe löst eine Küchenmaschine mit den Merkmalen des Anspruches 1.

Dadurch, daß die Sperrvorrichtung vom Deckel des Arbeitsbehälters gesteuert ist und eine Verbindung zwischen dem Elektromotor und dem Getriebe nur gestattet, wenn der Deckel auf den Arbeitsbehälter aufgesetzt ist und sich in seiner arretierten Drehstellung befindet, können die Werkzeuge erst dann in Bewegung gesetzt werden, wenn der Arbeitsbehälter verschlossen ist. Dank der formschlüssigen Verdrehsicherung des Deckels in seiner arretierten Stellung durch die Antriebsvorrichtung über die Sperrvorrichtung kann ferner der Deckel nicht vom Arbeitsbehälter abgenommen werden kann, ehe der Elektromotor vom Getriebe abgekuppelt ist. Der Antriebsmotor muß also erst ausgeschaltet und abgekuppelt werden, ehe der Arbeitsbehälter durch ein Abnehmen des Deckels geöffnet werden kann. Hierdurch wird mit einfachen Mitteln zuverlässig sichergestellt, daß der Benutzer Nicht in die sich in der Auslaufphase befindenden Werkzeuge greifen kann.

Ist als Antriebsvorrichtung ein Stabmixer üblicher Bauart vorgesehen, dann ist das Gehäuse des Unterteils der Küchenmaschine vorzugsweise mit Durchtrittsöffnungen für die stabförmigen Elemente der Schutzhaube des Stabmixers versehen, die mittels der Sperrvorrichtung verschließbar sind. Hierdurch wird mit einfachen, robusten Mitteln erreicht, daß der Stabmixer nicht mit dem Getriebe der Küchenmaschine gekuppelt werden kann, ehe sich der Deckel des Arbeitsbehälters in seiner arretierten Stellung befindet.

Ferner kann am Deckel eine Haltevorrichtung für die Antriebsvorrichtung vorgesehen sein, die nur in der arretierten Stellung des Deckels die Antriebsvorrichtung in derjenigen Position hält, in welcher ihre Antriebswelle die für eine Kupplung mit der Welle des Getriebes erforderliche fluchtende Ausrichtung auf diese Welle hat. Eine solche Haltevorrichtung verhindert ebenfalls eine Inbetriebnahme der Küchenmaschine, ehe der Deckel in seine arretierte Drehstellung gebracht worden ist, in welcher die Bedienungspersonen nicht in den Arbeitsbehälter greifen kann.

Weiterhin kann man aus Sicherheitsgründen den Netzschalter der Antriebsvorrichtung als monostabilen Schalter ausbilden, der in seinem stabilen Zustand geöffnet ist. Der Antriebsmotor wird dann automatisch abgeschaltet, sobald die Bedienungsperson die Antriebsvorrichtung losläßt. Vorteilhaft ist ein solcher Schalter auch insofern, als der Benutzer, der während des Gebrauchs der Küchenmaschine die Antriebsvorrichtung mit der Hand festhalten muß, die Küchenmaschine auch gegen ein Wandern auf der Stellfläche infolge von Vibrationen sichern kann.

Da unterschiedliche Arbeitsgeräte, beispielsweise ein Schnitzelwerk und eine Zentrifuge, sehr unterschiedliche optimale Drehzahlen und einen sehr unterschiedlichen Drehmoment-Bedarf haben, weist bei einer bevorzugten Ausführungsform der erfindungsgemäßen Küchenmaschine das Getriebe zusätzlich zu der ersten Arbeitswelle eine zu dieser gleichachsig angeordnete zweite Arbeitswelle auf, wobei beide Arbeitswellen unterschiedliche Arbeitsdrehzahlen und unterschiedliche Durchmesser haben. Ist außerdem die Antriebsvorrichtung auf wenigstens zwei unterschiedliche Arbeitsdrehzahlen umschaltbar, dann stehen vier verschiedene Drehzahlen für die Arbeitsgeräte zur Verfügung.

Vorteilhafte Ausbildungen der Sperrvorrichtung sind Gegenstand der Ansprüche 8 bis 11. Die hierbei zur Übertragung der Drehbewegung eines mit einem Mitnehmer des Deckels zusammenarbeitenden Betätigungsgliedes erforderliche Welle ist bei einer bevorzugten Ausführungsform in einer hohlen Säule drehbar gelagert, die an das Gehäuse des Unterteils sowohl im Abstand von der Arbeitswelle auch im Abstand von der mit der Antriebsvorrichtung zu kuppelnden Getriebewelle angeformt ist.

Unter Berücksichtigung des Platzbedarfes für das Arbeitsgerät oder die Arbeitsgeräte, die hohle Säule und die Antriebsvorrichtung ist ein Grundriß des Unterteils der erfindungsgemäßen Küchenmaschine gemäß Anspruch 15 besonders vorteilhaft.

Im folgenden ist die Erfindung anhand eines in der Zeichnung dargestellten Ausführungsbeispiels im einzelnen erläutert. Es zeigen
- Fig. 1: eine Seitenansicht des Ausführungsbeispiels in Kombination mit einem Arbeitsgerät,
- Fig. 2: eine Frontansicht des Ausführungsbeispiels,
- Fig. 3: eine Draufsicht auf das Ausführungsbeispiel,
- Fig. 4: eine Seitenansicht des Ausführungsbeispiels ohne Antriebsvorrichtung und Arbeitsgerät,
- Fig. 5: eine Draufsicht auf das Ausführungsbeispiel bei abgenommenem Arbeitsgerät und abgenommener Antriebsvorrichtung,
- Fig. 6: eine im Bereich der Säule im Schnitt, im übrigen ungeschnitten dargestellte Ansicht des Ausführungsbeispiels mit aufgesetztem Arbeitsgerät,
- Fig. 7: einen unvollständig dargestellten, durch die Antriebswelle des Getriebes gehenden Längsschnitt des Ausführungsbeispiels bei sich in der Freigabestellung befindender Sperrvorrichtung,
- Fig. 8: einen Schnitt entsprechend Fig. 7 bei sich in der Sperrstellung befindender Sperrvorrichtung,
- Fig. 9: einen Schnitt durch den Deckel und den mit der Arbeitswelle gekuppelten Teil einer Zentrifuge,
- Fig. 10: eine Draufsicht auf den Deckel der Zentrifuge.

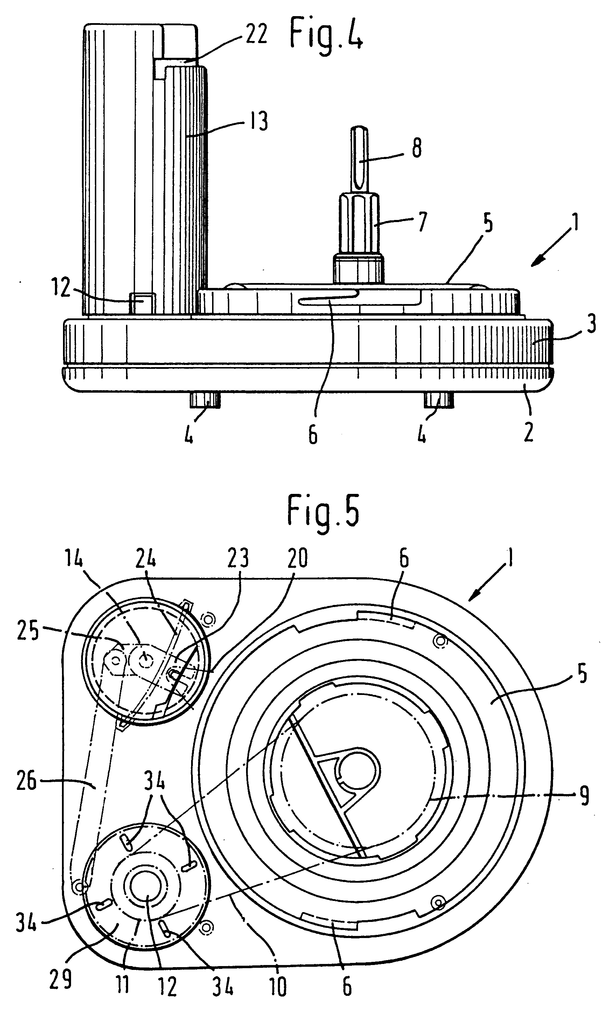

Das in der Zeichnung dargestellte Ausführungsbeispiel der erfindungsgemäßen Küchenmaschine weist einen als Ganzes mit 1 bezeichneten Unterteil auf, dessen aus Kunststoff bestehendes Gehäuse aus einem schalenartigen Gehäuseunterteil 2 und einem auf diesen aufgesetzten Gehäuseoberteil 3 besteht. Von der Unterseite des Gehäuseunterteils 2 stehen Füße 4 ab. Wie insbesondere die Fig. 4 und 5 zeigen, bilden der Gehäuseoberteil 3 eine etwas erhöhte, im wesentlichen kreisförmig Stellfläche 5 für den Arbeitsbehälter eines Arbeitsgerätes oder unterschiedlicher Arbeitsgeräte. Um den Arbeitsbehälter sicher in der Arbeitsstellung zu halten, ist der zylindrische Wandbereich, der die Stellfläche 5 trägt, mit diametral angeordneten Bajonettverschlußnuten 6 versehen, mit denen Vorsprünge des Arbeitsbehälters in dessen Arbeitsstellung in Eingriff sind.

Im Zentrum der Sperrfläche 5 ragen aus dem Gehäuseoberteil 3 zwei gleichachsig ausgebildete Arbeitswellen 7 und 8 heraus, deren Längsachse lotrecht auf der Stellfläche 5 steht. Die im Durchmesser kleinere Arbeitswelle 8 steht über das freie Ende der im Durchmesser größeren, hohlen Arbeitswelle 7 über. Ihre Arbeitsdrehzahl ist größer als diejenige der Arbeitswelle 7.

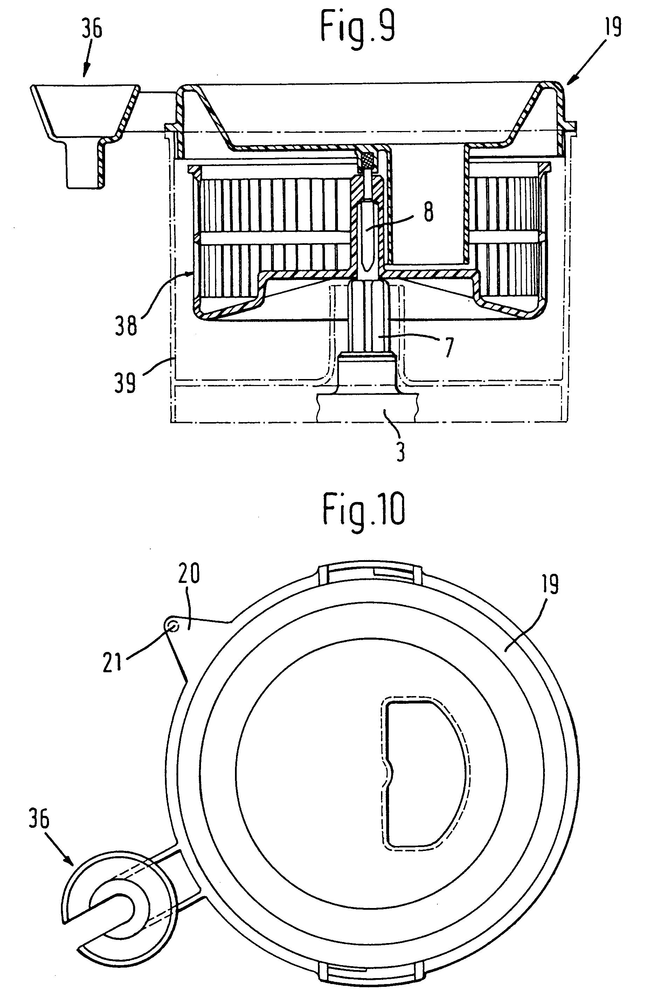

Die Arbeitswellen 7 und 8 werden über ein gemeinsames, in bekannter Weise ausgebildetes Getriebe angetrieben, das im Unterteil 1 der Küchenmaschine angeordnet ist und dort eine Riemenscheibe 9 aufweist, die über einen Zahnriemen 10 einer im Durchmesser mäßig kleineren Riemenscheibe 11 angetrieben wird, die mit zur Achse der Riemenscheibe 9 und den Arbeitswellen 7 und 8 paralleler Achse lotrecht im Unterteil 1 drehbar gelagert ist, wobei der Achsabstand größer ist als der Radius der Stellfläche 5. Wie insbesondere die Fig. 7 und 8 zeigen, weist die Riemenscheibe 11 eine hohle Nabe 12 auf, die über die Oberseite des Gehäuseoberteils 3 übersteht und in diesem überstehenden Bereich mit einem nicht dargestellten Querschlitz versehen ist.

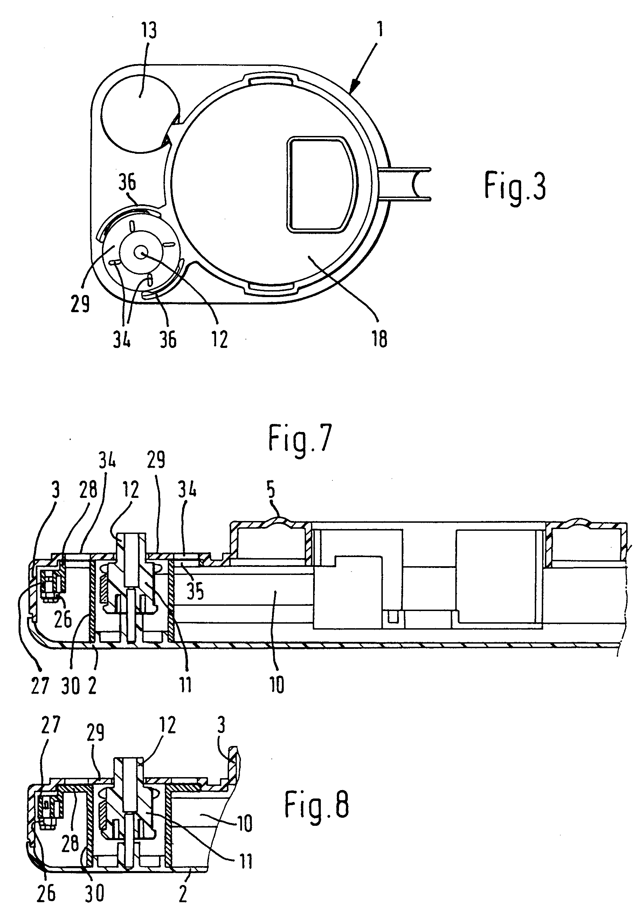

Wie sowohl die Fig. 3 als auch die Fig. 5 zeigt, ist der Grundriß des Unterteils 1 durch einen Linienzug definert, der aus einem Halbkreis, zwei sich an diesen anschließenden, parallel zueinander verlaufenden Linien und einem im rechten Winkel zu letzteren verlaufenden Linie gebildet ist, welche über Viertelkreise mit einem wesentlich kleineren Radius als der Halbkreis sich an die beiden parallel verlaufenden Linien anschließt. Der Halbkreis hat einen etwas größeren Radius als die Stellfläche 5, und in einem der durch die Viertelkreise begrenzten Eckbereiche befindet sich im Abstand vom Viertelkreis die Nabe 12.

Im entsprechenden Abstand vom anderen Viertelkreis befindet sich das Zentrum einer an den Gehäuseteil 3 angeformten, hohlzylindrischen Säule 13, die in einer zu den Arbeitswellen 7 und 8 parallelen Richtung sich von der Oberseite des Gehäuseoberteils 3 nach oben erstreckt. Zwischen der Außenmantelfläche und dem die Stellfläche 5 tragenden zylindrischen Bereich des Gehäuseoberteils 3 ist ein Zwischenraum vorhanden für die den zylindrischen Bereich übergreifende untere Randzone der Arbeitsbehälter.

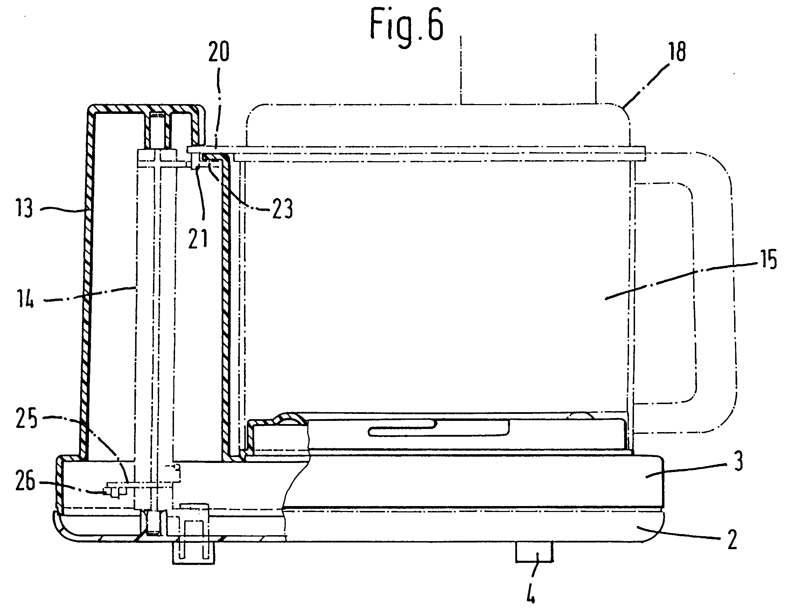

Wie insbesondere Fig. 6 zeigt, ist in der oben verschlossenen Säule 13 eine vertikal angeordnete, im Ausführungsbeispiel aus Kunststoff bestehende Betätigungswelle 14 mit vertikaler Achse angeordnet und im Bereich ihres oberen Endes drehbar gelagert. Das untere Ende ist im Gehäuseunterteil 2 drehbar gelagert. Diese Betätigungswelle 14 gehört zu einer Sperrvorrichtung, die sicherstellt, daß der auf den Unterteil 1 aufgesetzte Arbeitsbehälter eines Arbeitsgerätes mittels des zugehörigen Deckels verschlossen ist, während sich die bewegenden oder rotierenden Teile des Arbeitsgerätes in Bewegung sind.

Der auf die Stellfläche 5 aufzusetzende und mit dem Unterteil 1 über dessen Bajonettverschlußnuten 6 verbindbare Arbeitsbehälter 15, bei dem es sich beispielsweise um den Arbeitsbehälter eines Schneide-, Raspel- oder Reibewerkes oder auch um den Arbeitsbehälter einer Zentrifuge handeln kann, weist im Bereich seines oberen Randes an diametralen Stellen Bajonettverschlußnuten 16 auf, mit denen Bajonettverschlußelemente 17 eines zugeordneten Deckels in Eingriff bebracht werden können. Der Deckel wird hierzu auf den Arbeitsbehälter 15 aufgesetzt und soweit gedreht, bis die Bajonettverschlußelemente 17 am Ende der Bajonettverschlußnuten 16 anliegen.

Wie Fig. 6 für den Deckel 18 eines Schneide-, Raspel- und Reibewerkes und Fig. 10 für den Deckel 19 einer Saftzentrifuge zeigen, ist an den Deckelrand eine radial abstehende Zunge 20 angeformt, die im Bereich des freien Endes einen lotrecht nach unten abstehenden Mitnehmerstift 21 trägt. Die Säule 13, die sich bis in die Höhe der Oberseite des Deckels erstreckt, ist mit einem Schitz 22 versehen, durch den hindurch die Zunge 20 und er Mitnehmerstift 21 in das Innere der Säule 13 eingeführt werden können. Außerdem ist im Ausführungsbeispiel die Säule 13 auf der dem Deckel zugekehrten Seite über die Höhe des Deckels mit einer Einziehung versehen, die nach unten hin durch einen Wandteil begrenzt ist, auf dem die Zunge 20 eine Auflage findet.

Wie die Fig. 5 und 6 zeigen, steht von der Betätigungswelle 14 radial ein gabelförmiges Betätigungsglied 23 ab, das drehfest mit der Betätigungswelle 14 verbunden ist. Wenn der Deckel nach dem Aufsetzen auf den Arbeitsbehälter gedreht wird, bei einer Blickrichtung gemäß Fig. 5 entgegen dem Uhrzeigersinn, tritt der Mitnehmerstift 21 in den Schlitz des Betätigungsgliedes 23 ein, noch ehe der Deckel seine Endstellung erreicht hat, in der ihn die Bajonettverschlußnuten 16 und die Bajonettverschlußelemente 17 arretieren. Deshalb wird das Betätigungsglied 23 vom Mitnehmerstift 21 mitgenommen und in die in Fig. 5 dargestellte Schwenklage gebracht, die es am Ende der Drehbewegung des Deckels einnimmt. Sowohl in dieser Endstellung als auch in derjenigen Endstellung, in welcher beim Drehen des Deckels im Uhrzeigersinn bei einer Blickrichtung gemäß Fig. 5 der Mitnehmerstift 21 sich vom Betätigungsglied 23 löst, wird das Betätigungsglied 23 mittels einer vorgespannten Blattfeder 24 kraftschlüssig gesichert. Hierdurch ist sichergestellt, daß die Drehstellung der Betätigungswelle 14 stehts der Drehstellung des Deckels entspricht und sich nicht ohne die Einwirkung des Mitnehmerstiftes 21 verändern kann. Die Enden der Blattfeder 24 sind an der Wand der Säule 13 festgelegt.

Im Bereich des unteren Endes der Betätigungswelle 14 ist mit dieser drehfest ein von ihr radial abstehender Schwenkarm 25 verbunden, an den das eine Ende eines Verbindungshebels 26 angelenkt ist, mit dessen anderem Endabschnitt ebenfalls mit zur Betätigungswelle 14 paralleler Achse ein Verbindungsteil 27 verbunden ist, der an den äußeren Rand einer Scheibe 28 und eines Sperrkörpers angeformt ist. Wie die Fig. 7 und 8 zeigen, liegt die Scheibe 28 unmittelbar unter eines die Nabe 12 konzentrisch umgebenden Ringbereiches 29 der oberen Begrenzungswand des Gehäuseoberteils 3. Die Scheibe 28 ist an das obere Ende einer hohlzylindrischen Nabe 30 angeformt, welche drehbar im Unterteil 1 gelagert ist und mit zwei nach unten offenen, nicht dargestellten Schlitzbereichen versehen ist, in denen der Zahnriemen 10 hindurchtritt. Infolge der Verbindung des aus der Ringscheibe 28 und der hohlzylindrischen Nabe 30 bestehenden Sperrkörpers über ein Hebegetriebe mit dem Betätigungsglied 23 entspricht die Drehstellung des Sperrkörpers stets derjenigen des Betätigungsgliedes 23.

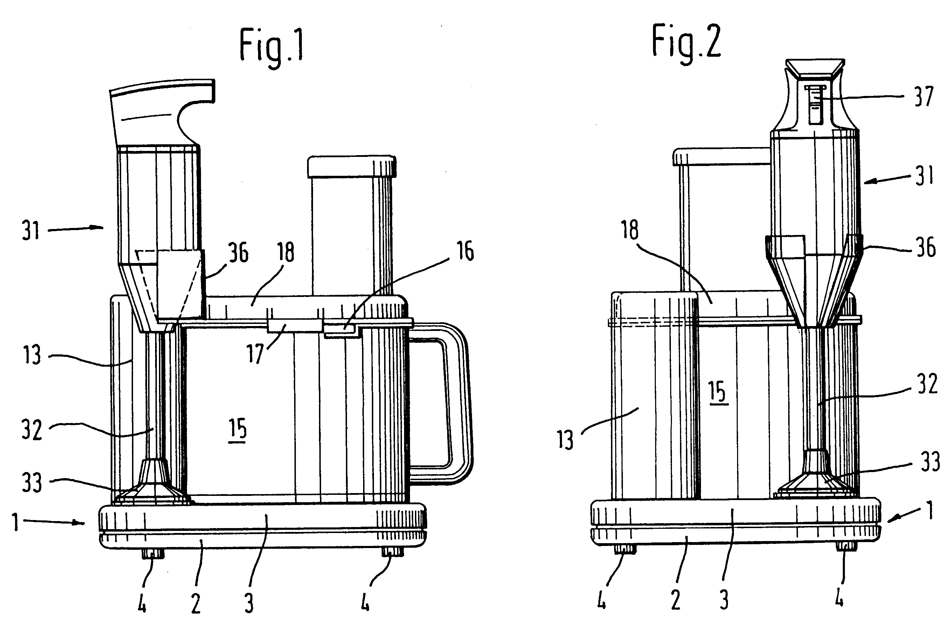

Im Ausführungsbeispiel wird die Antriebsvorrichtung der Küchenmaschine durch einen Stabmixer 31 bekannter Bauart gebildet. Wie die Fig. 1 und 2 zeigen, weist der Stabmixer 31 im Anschluß an einen zylindrischen Abschnitt seines Gehäuses einen konischen Abschnitt auf, über dessen verjüngtes Ende ein hohler Stab 32 übersteht, an dessen freiem Ende eine Schutzhaube 33 festgelegt ist, von deren dem Gehäuse abgewandter Seite vier stabförmige Elemente in einer zur Längsachse des Stabes 32 paralleler und konzentrischer Anordnung abstehen. In dem hohlen Stab 32 befindet sich die Antriebswelle, die wesentlich weniger weit als die stabförmigen Elemente über die Schutzhaube 33 überstehen und in dem überstehenden Endabschnitt einen Querstift trägt, der in Eingriff mit dem Querschlitz der Nabe 12 der Riemenscheibe 11 gebracht werden muß. Um diese Verbindung zwischen der Antriebswelle des Stabmixers 31 und der Riemenscheibe 11 herstellen zu können, müssen die von der Schutzhaube 33 abstehenden, stabförmigen Elemente in den Unterteil 1 eingeführt werden. Der Ringbereich 29 ist deshalb in einer der Anordnungen der stabförmigen Elemente ensprechenden Anordnung mit Durchtrittsöffnungen 34 versehen, wie die Fig. 3, 5 sowie 7 und 8 zeigen. Der Außendurchmesser des Ringbereiches 29, der etwas erhöht liegt, ist so gewählt, daß er mit geringem Spiel von der Schutzhaube 23 übergriffen werden kann, wodurch diese eine zusätzliche Sicherung gegen eine radiale Verschiebung erfährt.

Die Scheibe 28 des Sperrkörpers ist, wie Fig. 6 zeigt, mit Durchtrittsöffnungen 35 versehen, die eine der Anordnung der Durchtrittsöffnungen 34 entsprechende Anordnung haben, damit sie in derjenigen Drehstellung, die der in Fig. 3 dargestellten, arretierten Stellung des Deckels 18 entspricht, die Durchtrittsöffnungen 34 für den Durchtritt der stabförmigen Elemente freigeben. In derjenigen Drehstellung des Deckels, in welcher dieser vom Arbeitsbehälter abgenommen werden kann oder auf ihn aufgesetzt werden muß, verschließt hingegen die Scheibe 28 die Durchtrittsöffnungen 34, wie Fig. 8 zeigt. Dies heißt, daß in dieser Drehstellung die Welle des Stabmixers 31 nicht mit der Nabe 12 der Riemenscheibe 11 gekuppelt werden kann.

Die Scheibe 28 stellt ferner sicher, daß der Deckel des Arbeitsgerätes vom Arbeitsbehälter nicht abgenommen werden kann, so lange die Welle des Stabmixers 31 mit der Nabe 12 der Riemenscheibe 11 gekuppelt ist. Die Scheibe 28 kann nämlich nicht gedreht werden, so lange die stabförmigen Fortsätze der Schutzhaube 33 des Stabmixers 31 die Durchtrittsöffnungen 35 durchdringen. Damit ist das Betätigungsglied 23 mechanisch gegen eine Schwenkbewegung gesichert, weshalb eine Schwenkbewegung der Zunge 20 des Deckels, wie sie zum Lösen des Deckels erforderlich ist, nicht ausgeführt werden kann. Dies ist erst möglich, nachdem der Stabmixer 31 vom Unterteil 1 getrennt worden ist.

Eine zusätzliche Sicherung dagegen, daß ein Benutzer in die sich bewegenden Teile eines Arbeitsgerätes greifen kann, ist dadurch gegeben, daß an den Deckel des Arbeitsgerätes außer der Zunge 20 eine Haltevorrichtung 36 für den Stabmixer 31 angeformt ist. Diese Haltevorrichtung 36 hat eine becherartige, im Ausführungsbeispiel konische Form mit einem radialen Schlitz für den Durchtritt des Stabes 32 des Stabmixers 31. Nachdem der Stab 32 durch diesen Schlitz hindurch in die Haltevorrichtung 36 eingeführt worden ist, muß der Stabmixer 31 gegen den Unterteil 1 hin abgesenkt werden, um den konischen Endabschnitt seines Gehäuses in Anlage an die entsprechend konische Innenfläche der Haltevorrichtung 36 zu bringen. Die Haltevorrichtung 36 ist jedoch nur dann auf den mit den Durchtrittsöffnungen 34 versehenen Ringbereich und die Nabe 12 der Riemenscheibe 11 ausgerichtet, wenn der Deckel sich in seiner arretierten Stellung befindet. Deshalb muß zunächst der Deckel in diese Stellung gebracht werden, ehe der Stabmixer 31 in die Haltevorrichtung 36 eingesetzt werden kann, was wiederum Voraussetzung dafür ist, seine Welle mit der Riemenscheibe 11 kuppeln zu können. Ebenso verhindert die Haltevorrichtung 36 eine Drehbewegung des Deckels aus der arretierten Stellung heraus, solange der Stabmixer 31 noch mit der Riemenscheibe 11 gekuppelt ist.

Schließlich trägt ein als monostabiler Schalter ausgebildeter Netzschalter 37 des Stabmixers 31 zu einem sehr hohen Sicherheitsstandart bei, weil ein derartiger Netzschalter 37 den Benutzer zwingt, während der Benutzung der Küchenmaschine den Stabmixer 31 mit der Hand festzuhalten.

Während die Werkzeuge eines Schnitzel-, Rühr- oder Knetwerkes mit der die kleinere Arbeitsdrehzahl aufweisenden Arbeitswelle 7 gekuppelt werden, wird, wie Fig. 9 zeigt, beispielsweise der Zentrifugenteil 38 einer Saftzentrifuge mit der die höhere Arbeitsdrehzahl aufweisenden Arbeitswelle 7 gekuppelt. Sowohl die Arbeitsdrehzahl der Arbeitswelle 7 als auch diejenige der Arbeitswelle 8 können dadurch verändert werden, daß mittels eines nicht dargestellten Schalters die Arbeitsdrehzahl des Stabmixers 31 verändert wird.

Wie die Fig. 9 und 10 zeigen, ist auch der auf das den Zentrifugenteil 38 aufnehmende Gehäuse 39 aufsetzbare Deckel 19 mit einer Zunge 20 und einer Haltevorrichtung 36 versehen.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Küchenmaschine, insbesondere Haushaltküchenmaschine, mit einem Unterteil (1), auf dessen Gehäuse (2,3) ein mittels eines in eine arretierte Stellung drehbaren Deckels (18,19) verschließbarer Arbeitsbehälter (15,39) eines Arbeitsgerätes unter Bildung einer lösbaren Verbindung zwischen ihm und dem Gehäuse (2,3) aufsetzbar ist, mit einer Antriebsvorrichtung (31), die einen in einem separaten Gehäuse angeordneten Elektromotor aufweist, der unter Bildung einer lösbaren Verbindung mit einem im Gehäuse (2,3) des Unterteils (1) vorgesehenen Getriebe (9,10,11) auf das Unterteil (1) aufsetzbar ist, und mit einer mittels des Deckels (18,19) des Arbeitsbehälters (15,39) steuerbaren Vorrichtung (14,23 bis 28), welche die Inbetriebnahme des Elektromotors nur gestattet, wenn der Deckel (18,19) auf den Arbeitsbehälter (15,32) aufgesetzt ist und sich in seiner arretierten Drehstellung befindet, gekennzeichnet durch
a) eine Ausbildung der mittels des Deckels (18,19) steuerbaren Vorrichtung als eine das Kuppeln des Elektromotors mit dem Getriebe (9,10,11) nur bei arretierter Drehstellung des Deckels (18,19) gestattende Sperrvorrichtung (14,23 bis 28),
b) eine formschlüssige Verdrehsicherung des Deckels (18,19) in seiner arretierten Stellung durch die Antriebsvorrichtung (31) über die Sperrvorrichtung (14,23 bis 28), und
c) ein in der arretierten Drehstellung des Deckels (18,19) formschlüssig mit diesem gekuppeltes, drehbar gelagertes Betätigungsglied (23), das über ein Zwischengetriebe (14,25,26,27) der Sperrvorrichtung (14,23 bis 28) mit einem drehbar gelagerten Sperrkörper (28,30) verbunden ist, der bei hergestellter Verbindung zwischen dem Elektromotor und dem Getriebe (9,10,11) mit dem Gehäuse (23) des Unterteils (1) undrehbar verbunden ist.

2. Küchenmaschine nach Anspruch 1, dadurch gekennzeichnet, daß als Antriebsvorrichtung ein Stabmixer (31) vorgesehen ist, von dessen Gehäuse gleichachsig zur Antriebswelle ein Stab (32) absteht, der an seinem freien Ende eine Schutzhaube (33) trägt, von deren dem Gehäuse abgewandter Seite parallel zu der die Schutzhaube (33) durchdringenden Antriebswelle stabförmige Elemente abstehen, und daß das Gehäuse (2,3) des Unterteils (1) in einer Anordnung bezüglich der mit der Antriebswelle zu kuppelnden Welle (12) des Getriebes (9 bis 11), die der Anordnung der stabförmigen Elemente bezüglich der Antriebswelle des Stabmixers (31) entspricht, für die stabförmigen Elemente Durchtrittsöffnungen (34) aufweist, die mittels der Sperrvorrichtung (14,23 bis 28) verschließbar sind.

3. Küchenmaschine nach Anspruch 1 oder 2, gekennzeichent durch eine am Deckel (18,19) vorgesehene Haltevorrichtung (36) für die Antriebsvorrichtung (31), die nur in der arretierten Stellung des Deckels (18,19) die Antriebsverrichtung in derjenigen Position hält, in welcher ihre Antriebswelle die für ein Kuppeln mit dem Getriebe (9 bis 11) erforderliche, fluchtende Ausrichtung auf die anzutreibende Welle (12) des Getriebes (9 bis 11) aufweist.

4. Küchenmaschine nach Anspruch 3, dadurch gekennzeichnet, daß für einen Stabmixer (31) als Antriebsvorrichtung die Haltevorrichtung (36) eine becherartige, an denjenigen Endabschnitt des Gehäuses, über den der Stab (32) übersteht, angepaßte Form mit einem radialen Schlitz für den Druchtritt des Stabes (32) hat.

5. Küchenmaschine nach einem der Ansprüche 1 bis 4, dadurch gekennzeichnet, daß das Getriebe (9 bis 11) zusätzlich zu der ersten Arbeitswelle (7) eine zu letzterer gleichachsig angeordnete zweite Arbeitswelle (8) aufweist und beide Arbeitswellen (7,8) unterschiedliche Arbeitsdrehzahlen und unterschiedliche Durchmesser haben.

6. Küchenmaschine nach Anspruch 5, dadurch gekennzeichnet, daß die den kleineren Durchmesser und die höhere Arbeitsdrehzahl aufweisende Arbeitswelle (7) über das freie Ende der anderen Arbeitswelle (8) übersteht.

7. Küchenmaschine nach einem der Ansprüche 1 bis 6, dadurch gekennzeichnet, daß das Gehäuse (2,3) des Unterteils (1) im Abstand neben dem für die Verbindung des Getriebes (9 bis 11) mit der Antriebsvorrichtung (31) vorgesehenen Bereich (9) eine von der Oberseite dieses Gehäuses (2,3) abstehende, hohle Säule (13) aufweist, zwischen der und dem auf dem Unterteil (1) angeordneten Arbeitsbehälter (15,32) wenigstens ein geringer Spalt vorhanden ist, und daß die Säule (13) einen Teil (14,22 bis 25) der Sperrvorrichtung mit dem von einem Steuerelement (20,21) des Deckels (18,19) steuerbares Betätigungsglied (23) enthält.

8. Küchenmaschine nach Anspruch 7, dadurch gekennzeichnet, daß das Steuerelement (20,21) des Deckels (18,19) als ein Mitnehmer ausgebildet ist, in desen Bewegungsbahn das Betätigungsglied (23) ragt, das von einer in der Säule (13) drehbar angeordneten, parallel zur Arbeitswelle (7,8) liegenden Betätigungswelle (14) radial absteht.

9. Küchenmaschine nach Anspruch 8, dadurch gekennzeichnte, daß mit dem unteren, im Gehäuse (2,3) des Unterteils (1) drehbar gelagerten Ende der Betätigungswelle (14) über das durch ein Hebelgetriebe gebildete Zwischengetriebe, der drehbar im Unterteil (1) gelagerter Sperrkörper (28,30) in Drehverbindung steht, der nur in der der arretierten Stellung des Deckels (8,9) entsprechenden Drehstellung der Betätigungswelle (14) das Herstellen einer Verbindung zwischen der Antriebsvorrichtung (31) und dem Getriebe (9 bis 11) gestattet.

10. Küchenmaschine nach Anspruch 9, dadurch gekennzeichnet, daß der Sperrkörper (28,30) einen konzentrisch zu der mit der Antriebsvorrichtung (31) zu verbindenden Welle (12) des Getriebes (9 bis 11) in Gehäuse (2,3) drehbar gelagerten, hohlzylindrischen Teil (30) und einen an dessen oberem Ende vorgesehene Scheibe (28) aufweist, die unmittelbar unterhalb der mit den Durchtrittsöffnungen (34) für die Herstellung der Verbindung zwischen der Antriebsvorrichtung (31) und dem Getriebe (9 bis 11) versehenen Wand (28) des Gehäuses (2,3) angeordnet ist.

11. Küchenmaschine nach einem der Ansprüche 1 bis 10, dadurch gekennzeichnet, daß die Antriebsvorrichtung (31) einen Umschalter für die Auswahl zwischen zwei unterschiedlichen Arbeitsdrehzahlen hat.

12. Küchenmaschine nach einem der Ansprüche 1 bis 11, dadurch gekennzeichnet, daß die Antriebsvorrichtung (31) einen monostabilen Netzschalter (37) mit Stabilität im geöffneten Zustand hat.

13. Küchenmaschine nach einem der Ansprüche 1 bis 12, dadurch gekennzeichnet, daß das Arbeitsgerät ein Zerkleinerungsgerät, ein Rühr- oder Knetgerät oder ein Entsafter ist.

14. Küchenmaschine nach einem der Ansprüche 1 bis 13, dadurch gekennzeichnet, daß der Grundriß des Unterteils (1) einen Linienzug definiert, der aus einem Halbkreis, zwei sich an diesen anschließenden, parallel zueinander verlaufenden Linien und einer im rechten Winkel zu letzterer verlaufenden Linie gebildet ist, welche über Viertelkreise mit einem wesentlich kleineren Radius als der Halbkreis sich an die beiden parallel verlaufenden Linien anschließt, und daß in den beiden teilweise durch die Viertelkreise begrenzten Eckbereichen die für das Verbinden der Antriebsvorrichtung (31) mit dem Getriebe (9 bis 11) vorgesehene Kreiszone (28) und die im Querschnitt kreisförmige Säule (13) vorgesehen sind.

## Claims

1. Kitchen appliance, especially a domestic kitchen appliance, having a lower portion (1) on the housing (2, 3) of which a working container (15, 39) of a working apparatus can be placed, forming a releasable connection between it and the housing (2, 3), and can be closed by means of a lid (18, 19) which is rotatable into a locked position, having a drive device (31) which has, arranged in a separate housing, an electrical motor which can be placed on the lower portion (1), forming a releasable connection with a drive (9, 10, 11) provided in the housing (2, 3) of the lower portion (1), and having a device (14, 23 to 28) which can be controlled by means of the lid (18, 19) of the working container (15, 39) and which permits the start-up of the electrical motor only when the lid (18, 19) has been placed on the working container (15, 39) and is in its locked rotational position, characterised by
a) a development of the device, which can be controlled by means of the lid (18, 19), in the form of a locking device (14, 23 to 28) which permits the coupling of the electrical motor to the drive (9, 10, 11) only when the lid (18, 19) is in the locked rotational position;
b) a form-fitting protection against rotation of the lid (18, 19) in its locked position by means of the drive device (31) and by way of the locking device (14, 23 to 28); and
c) a rotatably mounted operating member (23) which is coupled in form-fitting manner to the lid (18, 19) when the latter is in its locked rotational position and which is connected by way of an intermediate drive (14, 25, 26, 27) of the locking device (14, 23 to 28) to a rotatably mounted locking body (28, 30) which is connected non-rotatably to the housing (23) of the lower portion (1) when the connection between the electrical motor and the drive (9, 10, 11) has been effected.

2. Kitchen appliance according to Claim 1, characterised in that there is provided as the drive device a mixer rod (31), from the housing of which projects coaxially with the drive shaft a rod (32) which carries at its free end a protective hood (33) from which rod-shaped elements, parallel to the drive shaft extending through the protective hood (33), project at the side remote from the housing, and in that the housing (2, 3) of the lower portion (1) has, in an arrangement with respect to the shaft (12) of the drive (9 to 11), which shaft is to be coupled to the drive shaft and which arrangement corresponds to the arrangement of the rod-shaped elements in respect of the drive shaft of the mixer rod (31), passage openings (34) for the rod-shaped elements, which passage openings can be closed by means of the locking device (14, 23 to 28).

3. Kitchen appliance according to Claim 1 or 2, characterised by a holding device (36), provided on the lid (18, 19), for the drive device (31), which, only when the lid (18, 19) is in the locked position, holds the drive device in the position in which its drive shaft is aligned with the shaft (12), to be driven, of the drive (9 to 11) in the manner necessary for coupling to the drive (9 to 11).

4. Kitchen appliance according to Claim 3, characterised in that, when a mixer rod (31) is provided as the drive device, the holding device (36) has a beaker-like form which is adapted to that end portion of the housing beyond which the rod (32) projects and which form has a radial slot for the passage of the rod (32).

5. Kitchen appliance according to any one of Claims 1 to 4, characterised in that the drive (9 to 11) has, in addition to the first working shaft (7) and arranged coaxially therewith, a second working shaft (8) and the two working shafts (7, 8) have different working speeds and different diameters.

6. Kitchen appliance according to Claim 5, characterised in that the working shaft (8) having the smaller diameter and the higher working speed projects beyond the free end of the other working shaft (7).

7. Kitchen appliance according to any one of Claims 1 to 6, characterised in that the housing (2, 3) of the lower portion (1) has, next to and separated from the area (9) provided for the connection of the drive (9 to 11) to the drive device (31), a hollow column (13) which projects from the upper side of the housing (2, 3) and between which and the working container (15, 32) arranged on the lower portion (1) at least one small gap is present, and in that the column (13) contains a portion (14, 22 to 25) of the locking device having the operating member (23) which can be controlled by a control element (20, 21) of the lid (18, 19).

8. Kitchen appliance according to Claim 7, characterised in that the control element (20, 21) of the lid (18, 19) is in the form of a catch, into the path of movement of which extends the operating member (23) projecting radially from an operating shaft (14) which is arranged to be rotatable in the column (13) and lies parallel to the working shaft (7, 8).

9. Kitchen appliance according to Claim 8, characterised in that the locking body (28, 30) rotatably mounted in the lower portion (1) is in rotational connection with the lower end, rotatably mounted in the housing (2, 3) of the lower portion (1), of the operating shaft (14) by way of the intermediate drive formed by a lever drive, and allows the drive device (31) to be connected to the drive (9 to 11) only when the operating shaft (14) is in the rotational position that corresponds to the locked position of the lid (8, 9).

10. Kitchen appliance according to Claim 9, characterised in that the locking body (28, 30) has a hollow cylindrical portion (30) which is rotatably mounted in the housing (2, 3) concentrically with the shaft (12) of the drive (9 to 11), which shaft is to be connected to the drive device (31), and a disc (28) which is provided at the upper end of the hollow cylindrical portion and which is arranged immediately beneath the wall (29) of the housing (2, 3), which wall is provided with the passage openings (34) for effecting the connection between the drive device (31) and the drive (9 to 11).

11. Kitchen appliance according to any one of Claims 1 to 10, characterised in that the drive device (31) has a switch for choosing between two different working speeds.

12. Kitchen appliance according to any one of Claims 1 to 11, characterised in that the drive device (31) has a monostable mains switch (37) with stability in the open state.

13. Kitchen appliance according to any one of Claims 1 to 12, characterised in that the working apparatus is a reducing device, a stirring or kneading device or a juice extractor.

14. Kitchen appliance according to any one of Claims 1 to 13, characterised in that the outline of the lower portion (1) defines a continuous line which is formed from a semi-circle, two parallel lines adjoining the semi-circle, and a line running at right-angles to the two parallel lines and adjoining the two parallel lines via quadrants having a substantially smaller radius than that of the semi-circle, and in that the circular area (28), provided for connecting the drive device (31) to the drive (9 to 11), and the column (13) of circular cross-section are provided in the two corner regions which are partly bounded by the quadrants.

## Revendications

1. Appareil de cuisine, en particulier appareil ménager de cuisine comprenant une embase (1) sur l'enveloppe (2, 3) de laquelle un récipient de travail (15, 19) d'un appareil de travail qui est obturable par un couvercle (18, 19) pouvant être tourné pour être mis à une position arrêtée peut être monté avec formation d'une liaison amovible entre lui-même et l'enveloppe (2, 3), comprenant un dispositif d'entraînement (31) qui comprend un moteur électrique disposé dans une enveloppe séparée, qui peut se monter sur l'embase (1) avec formation d'une liaison amovible avec une transmission (9, 10, 11) prévue dans l'enveloppe (2, 3) de l'embase (1), ainsi qu'un dispositif (14, 23 à 28) commandé au moyen du couvercle (18, 19) du récipient de travail (15, 39) qui n'autorise la mise en marche du moteur électrique que lorsque le couvercle (18, 19) est placé sur le récipient de travail (15, 39) et se trouve à sa position angulaire arrêtée,
caractérisé par
a) un mode de réalisation du dispositif commandé par le couvercle (18, 19) sous forme d'un dispositif de blocage (14, 23 à 28) qui n'autorise l'accouplement du moteur électrique à la transmission (9, 10, 11) qu'à la position angulaire arrêtée du couvercle (18, 19),
b) une immobilisation en rotation du couvercle (18, 19) à sa position arrêtée par complémentarité de formes au moyen du dispositif d'entraînement (31) et par l'intermédiaire du dispositif de blocage (14, 23 à 28) et
c) un organe d'actionnement (33) monté rotatif qui est accouplé par complémentarité de formes au couvercle (18, 19) lorsque celui-ci est à la position angulaire arrêtée, qui est relié au moyen d'une transmission intermédiaire (14, 25, 26, 27) du dispositif de blocage (14, 23 à 28) à un corps de blocage (28, 30) monté rotatif et qui est relié à l'enveloppe (23) de l'embase (1) de manière à ne pas pouvoir tourner lorsque le liaison entre le moteur électrique et la transmission (9, 10, 11) est établie.

2. Appareil de cuisine selon la revendication 1, caractérisé en ce que le dispositif d'entraînement qui est prévu est un mélangeur à tige (31) de l'enveloppe duquel part vers le bas une tige (32) qui est coaxiale à l'arbre d'entraînement et qui supporte à son extrémité libre une chape de protection (33) du côté de laquelle qui est tourné à l'opposé de l'enveloppe partent des éléments en forme de barres qui sont parallèles à l'arbre d'entraînement qui passe à travers la chape de protection (33) et en ce que l'enveloppe (2, 3) de l'embase (1) comporte des trous (34) de passage des éléments en forme de barres, trous qui sont obturables au moyen du dispositif de blocage (14, 23 à 28) et dont la disposition par rapport à l'arbre (12) de la transmission (9 à 11) qui doit être accouplé à l'arbre d'entraînement correspond à la disposition des éléments en forme de barres par rapport à l'arbre d'entraînement du mélangeur à tige (31).

3. Appareil de cuisine selon la revendication 1 ou 2, caractérisé par un dispositif (36) de support du dispositif d'entraînement (31) qui est prévu sur le couvercle (18, 19) et qui ne maintient le dispositif d'entraînement à la position à laquelle son arbre d'entraînement est à l'orientation nécessaire à l'accouplement avec la transmission (9, 11), à l'alignement de l'arbre de la transmission (9 à 11) à commander, que lorsque le couvercle (18, 19) est à la position arrêtée.

4. Appareil de cuisine selon la revendication 3, caractérisé en ce que, pour un mélangeur à tige (31), le dispositif de support (36) a en guise de dispositif d'entraînement une forme en godet adaptée à la partie extrême de l'enveloppe sur laquelle fait saillie la tige (32) et il comporte une fente radiale pour le passage de la tige (32).

5. Appareil de cuisine selon l'une des revendications 1 à 4, caractérisé en ce que la transmission (9 à 11) comprend en plus du premier arbre de travail (7) un second arbre de travail (8) qui est coaxial à ce dernier et les deux arbres de travail (7, 8) ont des vitesses de rotation différentes de travail et des diamètres différents.

6. Appareil de cuisine selon la revendication 5, caractérisé en ce que l'arbre de travail (8) ayant le plus petit diamètre et la vitesse de rotation de travail la plus élevée dépasse de l'extrémité libre de l'autre arbre de travail (7).

7. Appareil de cuisine selon l'une des revendications 1 à 6, caractérisé en ce que l'enveloppe (2, 3) de l'embase (1) comporte à distance, à côté de la zone (9) prévue pour la liaison de la transmission (9 à 11) au dispositif d'entraînement (31), une colonne creuse (13) qui est saillante sur le côté supérieur de cette enveloppe (2, 3) et entre laquelle et le récipient de travail (15, 32) disposé sur l'embase (1) il existe au moins un faible intervalle et en ce que la colonne (13) loge une partie (14, 22 à 25) du dispositif de blocage ainsi que l'organe d'actionnement (23) commandé par un élément d'entraînement (20, 21) du couvercle (18, 19).

8. Appareil de cuisine selon la revendication 7, caractérisé en ce que l'élément d'entraînement (20, 21) du couvercle (18, 19) est conformé en toc d'entraînement dans la voie de déplacement duquel pénètre l'organe d'actionnement (23) qui est saillant radialement d'un arbre d'actionnement (14) disposé rotatif dans la colonne (13) et qui est parallèle à l'arbre de travail (7,8).

9. Appareil de cuisine selon la revendication 8, caractérisé en ce que le corps de blocage (28, 30) monté rotatif dans l'embase (1) est en liaison rotative avec l'extrémité inférieure de l'arbre d'actionnement (14) qui est montée rotative dans l'enveloppe (2, 3) de l'embase (1) au moyen de la transmission intermédiaire formée d'une transmission à levier, cette liaison en rotation n'autorisant l'établissement d'une liaison entre le dispositif d'entraînement (31) et la transmission (9 à 11) qu'à la position angulaire de l'arbre d'actionnement (14) qui correspond à la position arrêtée du couvercle (8,9).

10. Appareil de cuisine selon la revendication 9, caractérisé en ce que le corps de blocage (28, 30) comprend une partie cylindrique creuse (30) montée rotative dans l'enveloppe (2, 3) concentriquement à l'arbre (12) de la transmission (9 à 11) qui doit être relié au dispositif d'entraînement (31), ainsi qu'un disque (28) prévu à l'extrémité supérieure de cette partie cylindrique creuse et qui est disposé immédiatement au-dessous de la paroi (29) de l'enveloppe (2, 3) qui comporte les trous (34) de passage pour l'établissement de la liaison entre le dispositif d'entraînement (31) et la transmission (9 à 11).

11. Appareil de cuisine selon l'une des revendications 1 à 10, caractérisé en ce que le dispositif d'entraînement (31) comprend un commutateur pour la sélection entre deux vitesses différentes de rotation de travail.

12. Appareil de cuisine selon l'une des revendications 1 à 11, caractérisé en ce que le dispositif d'entraînement (31) comprend un commutateur principal monostable (37) à stabilité à l'état d'ouverture.

13. Appareil de cuisine selon l'une des revendications 1 à 12, caractérisé en ce que l'appareil de travail est un appareil de fractionnement, un appareil batteur-mixeur ou à pétrir ou un presse-agrumes.

14. Appareil de cuisine selon l'une des revendications 1 à 13, caractérisé en ce que l'embase (1) délimite en projection horizontale un tracé qui est formé d'un demi-cercle, de deux lignes parallèles se raccordant à ce dernier et d'une ligne inscrivant un angle droit avec ces dernières et qui se raccorde aux deux lignes parallèles par des quarts de cercle ayant un rayon beaucoup plus petit que celui du demi cercle et en ce que la zone circulaire (28) prévue pour la liaison du dispositif d'entraînement (31) avec la transmission (9 à 11), ainsi que la colonne (13) de section transversale circulaire sont prévues dans les deux zones d'angle délimitées partiellement par les quarts de cercle.
